# EUROPEAN PATENT APPLICATION

(11) **EP 3 977 852 A1**
(43) Date of publication of application: **06.04.2022**
(21) Application number: 20199707.9
(22) Date of filing: 01.10.2020
(51) Int. Cl.: A01M 21/04

(54) **APPARATUS AND METHOD FOR ELECTRICALLY KILLING PLANTS**

(71) Applicant: Ubiqutek Ltd., Kingstanding, Birmingham B44 8LS (GB)
(72) Inventor: DIPROSE, Robert, Birmingham, West Midlands B44 8LS (GB); DIPROSE, Michael, Hope Valley, Derbyshire S32 3XB (GB); DIPROSE, Andrew, London, Greater London N1 5LQ (GB)
(74) Representative: reuteler & cie SA

(57) **Abstract**

Electrical apparatus to kill a plant or at least attenuate plant growth, the apparatus comprising: an electrical energy supply unit; an applicator unit comprising an applicator electrode; a return unit comprising a return electrode; electrical circuitry; the electrical energy supply unit arranged to apply electrical energy through a transmission circuit comprising the applicator electrode, and the return electrode, the electrical circuitry implementing a leakage system arranged to detect leakage of the electrical energy from the transmission circuit and/or electrical energy from the electrical energy supply unit and to prevent transmission of electrical energy through the transmission circuit once said leakage of electrical energy crosses a threshold.

## Description

### TECHNICAL FIELD

The present disclosure relates to electric apparatus that is configured to attenuate plant growth by the application of electrical energy thereto.

### BACKGROUND

In properties both commercial and domestic, it is common to kill or at least control the growth of unwanted plants, commonly referred to as weeds. Conventional methods include treatment with a pesticide or more particularly a herbicide. However, there is a growing concern over such treatment for environmental reasons and unwanted exposure of herbicides to humans and animals. Moreover, weeds are increasingly becoming naturally resistant so herbicides are becoming more and more ineffective. As a result of these numerous drawbacks, consumers are increasingly demanding organic produce, for which the use of herbicides is increasingly prohibited.

Consequently, there is a desire for alternative treatments, which do not include the above drawbacks. An example includes treatment by the application of electrical energy. US 4338743 discloses such apparatus, wherein an electrical energy is applied at 14.4 kV at 60 ± 5 Hz to plants. Such apparatus have failed to become widespread in the market over concern over safety. For example, the high voltage may be a risk to a person in proximity to a treated weed.

Therefore, in spite of the effort already invested in the development of said apparatus further improvements are desirable.

### SUMMARY

The present disclosure provides electrical apparatus to kill a plant or at least attenuate plant growth. The apparatus includes an electrical energy supply unit; an applicator unit comprising an applicator electrode; a return unit comprising a return electrode and; electrical circuitry. The electrical energy supply unit is arranged to apply electrical energy through a transmission circuit comprising the applicator electrode and the return electrode and a plant.

In embodiments, the electrical circuitry implements an electrical energy leakage system arranged to detect leakage of the electrical energy from the transmission circuit and/or the leakage of other electrical energy from the electrical energy supply unit and to prevent transmission of electrical energy through the transmission circuit once the leakage of electrical energy (e.g. a property thereof, which can include one or more of the voltage, current, power, phase) crosses a threshold.

By implementing an electrical energy leakage system to determine if a certain amount of electrical energy has leaked (referred to herein as determining "leakage") from the transmission circuit or the electrical energy supply unit, and upon said determination stop transmission of the electrical energy to the transmission circuit, the safety of the apparatus can be improved. For example, if a large amount of electrical energy has leaked from the transmission circuit proximal a plant, it could be transmitted to a user proximal the plant. Moreover, if a large amount of electrical energy has leaked from the electrical energy supply unit, e.g. due a fault of componentry of the electrical energy supply unit, it could be transmitted to a user of the apparatus. In both examples it is desirable to stop supply of electrical energy to the transmission circuit.

In embodiments, the electrical energy leakage system is arranged to determine the electrical current supplied to the applicator electrode and the amount of electrical current returned to the return electrode and if the current is imbalanced by an amount determined by the threshold, then to determine leakage. The embodiment can be implemented by a residual current device (RCD) arranged between the electrical energy supply unit and the applicator electrode and between the return electrode and the electrical energy supply unit. A similar arrangement can be implemented to determine leakage in circuit of the electrical energy supply unit.

In embodiments, the leakage system comprises at least one leakage circuit (which includes at least a portion that is distinct from other circuits including the transmission circuit) wherein the leakage system comprises at least one leakage circuit, having a leakage input and a leakage return, the leakage input to receive leakage electrical energy from the transmission circuit and/or the electrical energy supply unit. The leakage system is arranged to prevent transmission of electrical energy through the transmission circuit once leakage electrical energy through the leakage circuit crosses the threshold.

By implementing a leakage circuit with a detected leakage input, the leakage of electrical energy at specific points of the apparatus may be determined by positioning the leakage input at these points, e.g. those in close proximity to the user, such as a handle or user interface or at other critical points on the apparatus.

This arrangement may be more representative than the previous embodiment, which implemented determining leakage via a current imbalance in the transmission circuit (or other circuit of the electrical energy supply unit). This is because in normal operation (in the example of leakage from the transmission circuit) current of the electrical energy can spread though soil mass proximal the plant, and some current can be lost via direct contact with the soil and other items, e.g. a safety earth of the power supply. Current lost in this manner may not represent a safety hazard, and therefore the electrical energy through the transmission circuit does not need preventing, however the current imbalance could be determined as leakage.

As used herein the term "leakage input" may refer to an electrically conductive connector/terminal/member e.g. a pin or an electrode or other implement, suitable for conveying leakage electrical energy from a point on the apparatus to the leakage circuit.

By implementing a dedicated leakage circuit, the leakage electrical energy through the leakage circuit (e.g. an electrical quantity of the leakage electrical energy) can be conveniently measured to determine if said threshold has been crossed.

In embodiments, the leakage system determines leakage via an electrical quantity of the leakage electrical energy though the leakage circuit (e.g. one or more of: the electrical potential over the leakage input and leakage return or a portion of the leakage circuit, current, phase, power or other electrical quantity) crossing a threshold that is set for that electrical quantity. For example, if the electrical current is selected as the electrical quantity, if this crosses a particular threshold of electrical current then leakage may be determined.

In embodiments, the leakage system implements a detection circuit, wherein the detection circuit implements a detection unit to determine if the leakage electrical energy in the leakage circuit crosses the threshold. By implementing a dedicated detection circuit, the amount of leakage electrical energy though the leakage circuit may be accurately determined. The detection circuit may be electrically separated, e.g. isolated, from the leakage circuit. In this way large quantities of leakage electrical energy in the leakage circuit may be prevented from damaging sensitive sensing circuitry in the detection circuit.

In embodiments, detection unit comprises a first group of one or more of detection elements, wherein for an overall determination of the leakage electrical energy in the leakage circuit to cross the threshold, each of the first group of one or more detection elements is required to determine if the leakage electrical energy in the leakage circuit crosses the threshold. By implementing a plurality of detection units, wherein all (i.e. AND logic) are required to sense the electrical energy in the leakage circuit crossing the threshold for said determination, then the likelihood of false determinations that the electrical energy has crossed the threshold is reduced.

In embodiments, the detection unit comprises a second group of one or more detection elements, wherein for an overall determination of the leakage electrical energy in the leakage circuit to cross the threshold, each of the first group or each of the second group of one or more detection elements is required to determine if the leakage electrical energy in the leakage circuit crosses the threshold. By having separate groups of detection units, wherein AND logic is implemented for a group, and OR logic is implemented between the groups the accuracy of the determination may be increased.

In embodiments, a plurality of groups (e.g. including 3 or 4 etc.) of one or more detection elements are included, wherein for an overall determination of the leakage electrical energy in the leakage circuit to cross the threshold, each of a group of one or more detection elements is required to determine if the leakage electrical energy in the leakage circuit crosses the threshold.

In embodiments, the electrical circuitry of the leakage system (e.g. a processor) is arranged to receive a detection signal from the detection circuit. Each group of the one or more detection elements may be connected to the electrical circuitry with a separate circuit, such that each circuit provides an independent detection signal to the electrical circuitry.

In embodiments, the leakage system is arranged to determine leakage of electrical energy if the electrical potential of the leakage input (e.g. over the leakage input to ground) is greater than 0.5 or 1% or 5% of the electrical potential over the applicator electrode and return electrode.

In embodiments, the leakage system is arranged to determine leakage of electrical energy if the electrical current through the leakage circuit is greater than 0.5% or 1% or 5% or 10% or 20% of the electrical current through the transmission circuit.

In embodiments, the leakage system implements an electrically activated switch arranged to interrupt the electrical energy through the transmission circuit, wherein the leakage system is arranged to trigger the electrically activated switch to interrupt said electrical energy if the leakage of the electrical energy crosses said threshold. By implementing an electrically activated switch to break the circuit of the transmission circuit (or other circuit of the electrical energy supply unit which has the effect of preventing electrical energy from being supplied to the transmission circuit), the electrical energy may be quickly prevented from being transmitted. As used herein the term "electrically activated switch" may refer to any device capable of breaking a circuit upon receiving an electrical signal, and may include one or more of a: relay; a transistor; a MOSFET; a pneumatic or mechanical system that receive an electrical signal to actuate; other suitable like device.

In other embodiments, the electrical energy is prevented from being transmitted by shutting down the electrical energy supply unit, e.g. a power supply thereof.

In embodiments, the leakage system implements a control circuit to control the electrically activated switch. In embodiments, the electrical circuitry (e.g. a processor) is arranged to provide a control signal to the electrically activated switch via the control circuit to interrupt the electrical energy of the transmission circuit. The control signal may be triggered on receiving the detection signal.

In embodiments, the leakage system includes a restart actuator, wherein following prevention of transmission of electrical energy through the transmission circuit once said leakage of electrical energy crosses the threshold, the restart actuator and electrical circuitry is arranged to require actuation of the actuator to re-enable electrical energy to be transmitted through the transmission circuit. By implementing a restart actuator that requires operation by a user prior to reapplying the electrical energy through the transmission circuit after the safety of the apparatus may be increased.

In embodiments, the leakage system is configured to prevent transmission of electrical energy, when it is determined that the leakage of electrical energy has crossed the threshold, within a predetermined time duration, the time duration is selected based on a frequency of the electrical energy. The predetermined time duration (in seconds) may be equal to or less than 0.1 divided by the natural log of the frequency (in Hz).

By having a predetermined cut off time of the electrical energy, which is related to the frequency of the electrical energy, the amount of cycles a user may accidentally receive can be limited, which may reduce a trauma of any injury.

In embodiments, the electrical energy supply unit includes a converter to step-up low voltage electrical energy to a comparatively high voltage of the electrical energy of the transmission circuit.

As used herein the term "low voltage electrical energy" may refer to the electrical energy associated with any circuit on the low voltage side of the converter, e.g. before and after a switching system and/or a AD to DC converter or other componentry. Low voltage is defined relative to a high voltage of the electrical energy on a high voltage side of the converter, i.e. the electrical energy of the transmission circuit.

In embodiments, the leakage circuit includes a low voltage leakage circuit, in which the leakage input is arranged to receive leakage electrical energy from the low voltage electrical energy and the leakage return is arranged to return the leakage electrical energy to a power supply of the electrical energy supply unit.

By implementing a dedicated low voltage leakage circuit to determine leakage of low voltage electrical energy from the electrical energy supply unit, the safety of the apparatus may be increased. The leakage return may return the leakage electrical energy to the power supply via a direct connection to an neutral thereof or via a return earth electrode arranged to be inserted into the ground (i.e. when the neutral of the power supply is connected to the ground).

In embodiments, the leakage circuit includes a high voltage leakage circuit, in which the leakage input is arranged to receive leakage electrical energy from the transmission circuit and the leakage return is arranged to return the leakage electrical energy to the transmission circuit.

By implementing a dedicated high voltage leakage circuit to determine leakage of electrical energy from the transmission circuit, the safety of the apparatus may be increased. The leakage return may return the leakage electrical energy to the transmission circuit via a direct connection thereto or via a return earth electrode arranged to be inserted into the ground.

In embodiments, the high voltage leakage circuit includes the leakage input arranged as a leakage input electrode that is arranged on a peripheral surface of the apparatus. By arranging the leakage input on an exposed outer surface of the apparatus (e.g. of the applicator unit or the return unit or the electrical energy supply unit, including a housing of one of the aforementioned components) points where a user is likely to touch can be made safe. The peripheral surface can include an outwards facing surface. As used herein the term "outwards facing surface" may refer to a surface that has a vector which is normal to a plane of the surface that points away from the apparatus.

In embodiments, a body of the applicator unit includes a handle portion that is configured for a user to hold the applicator unit, wherein the leakage input electrode is arranged to receive electrical energy in operative proximity to the handle portion. As used herein "operative proximity" in respect of the handle portion may refer to electrical energy traveling proximal to or through the handle portion such that, the electrical energy may be transferred to a user holding the handle portion. In embodiments, the body of the applicator unit may carry one or more of: the electrical circuitry; the electrical energy supply unit.

In embodiments, an extension extends from the body, the extension carrying the applicator electrode at a proximal end, and the extension carrying the leakage input electrode, the leakage input electrode arranged between the applicator electrode and body (e.g. at a distal end of the extension). By implementing the leakage input between the applicator electrode and the body the body may be isolated from any electrical energy leaking from the transmission circuit.

In embodiments, the leakage input (e.g. the leakage input electrode) is arranged as a plurality of discrete interconnected leakage inputs arranged to receive leakage electrical energy, each to transmit the leakage electrical energy through the leakage circuit. A plurality of leakage inputs may be distributed on the apparatus to better capture any leakage electrical energy, e.g. at multiple points on the body of the applicator unit or chassis, all of which channel the electrical energy through the same leakage circuit.

In embodiments, an electrically common member (e.g. a chassis) is electrically connected to the electrical energy supply unit, wherein the high voltage leakage circuit and/or the low voltage leakage circuit includes the leakage input arranged as a terminal connected to the electrically common member.

By having the leakage input connected to an electrically common member, various components (e.g. of the electrical energy supply unit and/or the transmission circuit) can be electrically connected to the electrical common member so that a fault in any of the components can be detected with the leakage system, and safely transmitted away though the leakage circuit.

In embodiments, the electrically common member is arranged as a chassis that mounts, and may be electrically connected to, one or more of: the electrical energy supply unit; the applicator unit; the return unit. The chassis may be implemented as part of an agricultural vehicle, e.g. a tractor as a trailer to be driven by a tractor. By connecting the leakage input terminal to the chassis the chassis can be made safe.

In embodiments, the leakage return of the high voltage leakage circuit and/or the leakage return of the low voltage leakage circuit is arranged as an leakage return electrode for electrical connection with the ground. In embodiments, the leakage return electrode is carried by a chassis of the apparatus. By implementing a leakage input electrode arranged to abut/insert into the ground, leakage electrical energy through the leakage circuit can be safely transmitted from critical parts of the apparatus. In the case of both the high voltage leakage circuit and low voltage leakage circuit implementing a leakage return electrode for electrical connection with the ground, the same or separate leakage return electrodes can be implemented.

In embodiments, the high voltage leakage circuit and the low voltage leakage circuit includes the leakage input thereof arranged as a terminal connected to the electrically common member, and the apparatus includes a filtering system, which is implemented to filter: the low voltage electrical energy from transmitting through (including fully of substantially through) the high voltage leakage circuit and/or the electrical energy of the transmission circuit from transmitting through (including fully of substantially through) the low voltage leakage circuit.

By implementing both the leakage inputs of the high voltage and low voltage leakage circuits electrically connected together, and a filtering system that can filter the low voltage electrical energy from the high voltage electrical energy, the leakage electrical energy is transmitted through the correct one of the high voltage and low voltage leakage circuits. In this way a small leak of high voltage electrical energy cannot trigger a lower threshold of the low voltage detection circuit and cause unwanted shutdown of the apparatus etc.

In embodiments, the filtering system is arranged to filter frequency of electrical energy and the low voltage electrical energy has a lower (including DC with no frequency) frequency than the high voltage electrical energy. The wherein a frequency of the high voltage electrical energy may be implemented by a waveform shaping system of the electrical energy supply unit.

The present disclosure provides use of the apparatus as disclosed herein for treatment of a plant, e.g. to kill the plant. The use may implement any feature of the preceding embodiment or another embodiment disclosed herein.

The present disclosure provides a method of treating a plant with electrical energy, the method comprising: detecting leakage of electrical energy from at least one of A) a transmission circuit comprising an applicator electrode, and a return electrode, B) an electrical energy supply unit that supplies the electrical energy to the transmission circuit; preventing transmission of electrical energy through the transmission circuit once said leakage of electrical energy crosses a threshold.

The method may implement any feature of the preceding embodiment or another embodiment disclosed herein. The present disclosure provides electrical circuitry or a computer program to implement the method of the preceding embodiment or another embodiment disclosed herein.

The preceding summary is provided for purposes of summarizing some embodiments to provide a basic understanding of aspects of the subject matter described herein. Accordingly, the above-described features are merely examples and should not be construed to narrow the scope or spirit of the subject matter described herein in any way. Moreover, the above and/or proceeding embodiments may be combined in any suitable combination to provide further embodiments. Other features, aspects, and advantages of the subject matter described herein will become apparent from the following Detailed Description, Figures, and Claims.

### BRIEF DESCRIPTION OF THE FIGURES

Aspects, features and advantages of embodiments of the present disclosure will become apparent from the following description of embodiments in reference to the appended drawings in which like numerals denote like elements.
Figure 1 is a block system diagram showing embodiment electrical apparatus to attenuate plant growth.
Figure 2 is a schematic diagram showing the apparatus of figure 1.
Figure 3 is a schematic diagram showing an applicator unit of the apparatus of figure 1.
Figure 4 is a schematic diagram showing an return unit of the apparatus of figure 1.
Figure 5 is a schematic diagram showing an electrical energy supply unit of the apparatus of figure 1.
Figure 6 is a flow diagram showing embodiment processes implemented by the apparatus of figure 1.
Figure 7 is a schematic diagram showing an embodiment leakage system of the apparatus of figure 1.
Figure 8 is a diagram showing an embodiment arrangement of a leakage input electrode of the leakage system of figure 7 arranged on a hand held applicator unit of the apparatus of figure 1.
Figure 9 is a schematic diagram showing an embodiment detection unit of the leakage system circuit of figure 7.
Figure 10A is a diagram showing an embodiment arrangement of a leakage input electrode of the leakage system of figure 7 arranged on a chassis of the apparatus of figure 1.
Figure 10B is a diagram showing a magnified view of the leakage input electrode of figure 10A.
Figure 11 is a schematic diagram showing an embodiment leakage system of the apparatus of figure 1.

### DETAILED DESCRIPTION OF EMBODIMENTS

Before describing several embodiments of the apparatus, it is to be understood that the system is not limited to the details of construction or process steps set forth in the following description. It will be apparent to those skilled in the art having the benefit of the present disclosure that the system is capable of other embodiments and of being practiced or being carried out in various ways.

The present disclosure may be better understood in view of the following explanations:
As used herein, the term **"plant"** or **"weed"** may refer to an undesired plant in a human controlled setting, such as a farm field, garden, lawn or park. A weed may refer to a multicellular photosynthetic eukaryote.

As used herein, the term **"electrical arc"** or **'arc"** may refer to an electrical breakdown of a gas that produces an electrical discharge. An arc is formed by an electrical current through a normally nonconductive medium such as air, and is characterized by a plasma, which may produce visible light. An arc discharge is characterized by a lower voltage than a glow discharge and relies on thermionic emission of electrons from the electrodes supporting the arc.

As used herein, the term **"electrical energy"** or **"processed electrical energy"** may refer to electrical energy supplied by an electrical energy supply unit and applied to the plant, e.g. though a transmission circuit. The electrical energy may comprise a periodic or aperiodic waveform, i.e. a waveform that continuously repeats with the repeating units therein having a constant or a varying period, e.g. a pulsed wave with a fixed duty cycle or a varying duty cycle. The shape of the repeating unit may be one of or a combination of one or more of the following forms: sine wave; saw-tooth wave; triangular wave; square wave; pulsed, e.g. DC pulsatile, half-wave rectified; other known form. The exact shape of the repeating unit may be an approximation of one of the aforesaid forms for reasons of distortion, e.g. overshoot/undershoot and the associated ringing and settle time. The repeating unit may be positive or negative or a combination thereof with respect to a selected reference value, which is typically earth or the 0 V of the voltage supply but may be another positive or negative voltage level. The frequency of the waveform may be above 25 Hz, 1 khz, 10 kHz, 18 kHz or 25 kHz. It will be understood that when referring to the voltage of the electrical energy, when the electrical energy has a waveform, the voltage is in respect of a suitable quantity, such as RMS, peak or other. The same applies for other electrical quantities such as power and current.

As used herein, the term **"electrical energy supply unit"** may refer to any unit or system, including a distributed system, for generating and/or conditioning electrical energy for supply to a transmission circuit which, in use, incorporates a plant.

As used herein, the term **"electrical circuitry"** or **"electric circuitry"** or **"electronic circuitry"** or **"circuitry"** or **"control circuitry"** may refer to, be part of, or include one or more of the following or other suitable hardware or software components: an Application Specific Integrated Circuit (ASIC); electronic/electrical circuit (e.g. passive electrical components, which may include combinations of transistors, transformers, resistors, capacitors); a processor (shared, dedicated, or group); a memory (shared, dedicated, or group), that may execute one or more software or firmware programs; a combinational logic circuit. The electrical circuitry may be centralised on the apparatus or distributed, including distributed on board the apparatus and/or on one or more components in communication with the apparatus, e.g. as part of the system. The component may include one or more of a: networked-based computer (e.g. a remote server); cloud-based computer; peripheral device. The circuitry may be implemented in, or functions associated with the circuitry may be implemented by, one or more software or firmware modules. The circuitry may include logic, at least partially operable in hardware.

As used herein, the term **"processor"** or **"processing resource"** may refer to one or more units for processing including as an ASIC, microcontroller, FPGA, microprocessor, digital signal processor (DSP) capability, state machine or other suitable component. A processor may include a computer program, as machine readable instructions stored on a memory and/or programmable logic. The processor may have various arrangements corresponding to those discussed for the circuitry, e.g. on-board and/or off board the apparatus as part of the system.

As used herein, the term **"computer readable medium/media"** or **"data storage"** may include conventional non-transient memory, for example one or more of: random access memory (RAM); a CD-ROM; a hard drive; a solid state drive; a flash drive; a memory card; a DVD-ROM; a floppy disk; an optical drive,. The memory may have various arrangements corresponding to those discussed for the circuitry/processor.

As used herein, the term **"information carrying medium"** may include one or more arrangements for storage of information on any suitable medium. Examples include: data storage as defined herein; a Radio Frequency Identification (RFID) transponder; codes encoding information, such as optical (e.g. a bar code or QR code) or mechanically read codes (e.g. a configuration of the absence or presents of cut-outs to encode a bit, through which pins or a reader may be inserted).

As used herein, the term **"applicator unit"** or **"applicator"** may refer to any suitable device for applying electrical energy to a plant, including by direct contact with the plant and/or spark transmission.

As used herein, the term **"earth unit"** or **"return unit"** may refer to any suitable device for receiving electrical energy from a circuit including the plant and optionally the ground to complete a transmission circuit, including by direct contact with the plant and/or spark transmission.

As used herein, the term **"apparatus"** or **"electrical apparatus"** may refer to any combination of one or more of the following for treatment of a plant: electrical energy supply unit; electrical circuitry; applicator unit; applicator electrode; return unit; return electrode; transmission circuit.

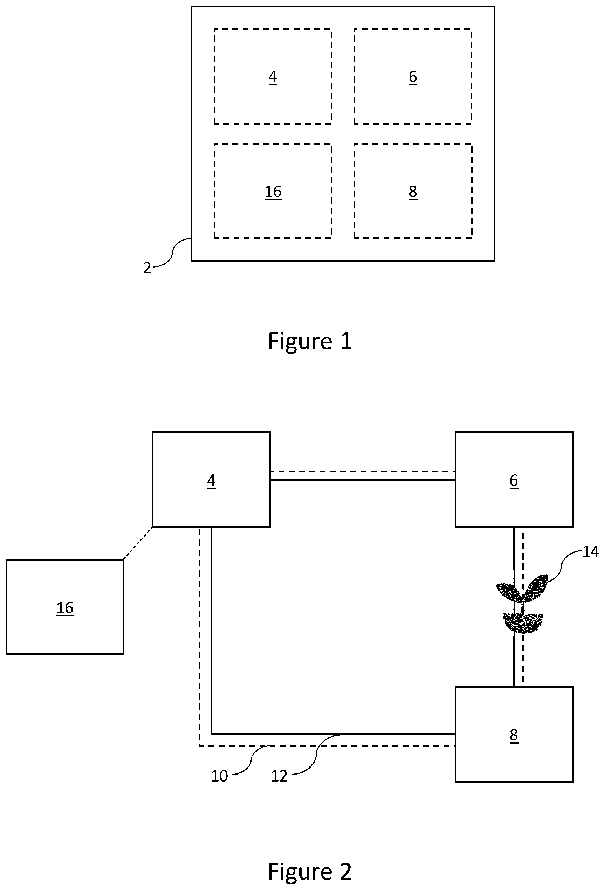

Referring to figures 1 and 2, apparatus **2** to attenuate plant growth, comprises an electrical energy supply unit **4**, an applicator unit **6** and an return unit **8.** The electrical energy supply unit supplies electrical energy **10** around a transmission circuit **12**, which includes the applicator unit **6**, return unit **8.**

The transmission circuit **12**, when treating a plant, may include said plant **14.** It will be understood that depending on the operative arrangement of the applicator unit and return unit, a return path of the transmission circuit **12** optionally includes other matter, such as proximal earth and fluid (e.g. air and moisture) to the plant.

The apparatus **2** includes electrical circuitry **16**, which may implement a range of control operations. In embodiments, said circuitry **16** is operable to control the electrical energy supplied by the electrical energy supply unit **4** through the transmission circuit **12**, as will be discussed.

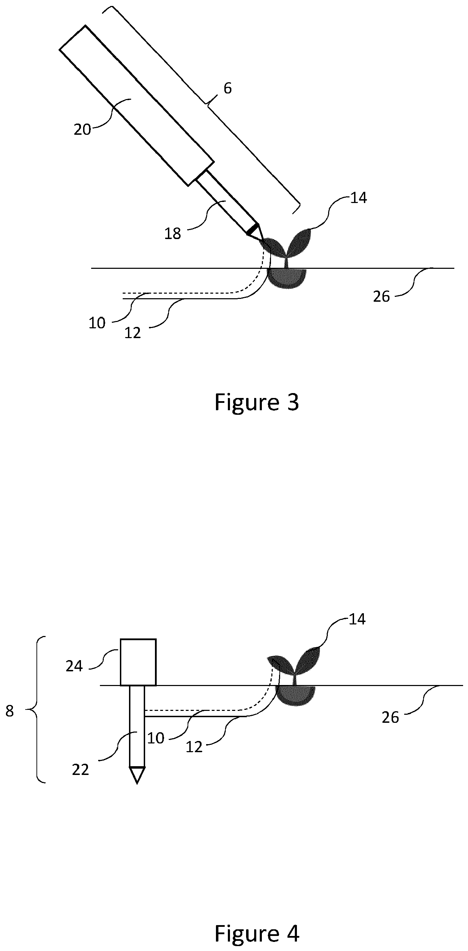

Referring to figure 3, the applicator unit **6** is adapted to receive electrical energy **10** from the electrical energy supply unit **4** and to transmit said electrical energy **10** to the plant **14** (shown in figure 2). The applicator unit **6** comprises an applicator electrode **18.** The applicator electrode **18** is electrically connected to the electrical energy supply unit **4** by an electrically conductive material, e.g. by wiring or solid material, which forms part of the transmission circuit **12.**

The applicator electrode **18** is adapted to apply the electrical energy **10** to the plant **14.** In embodiments, the applicator electrode **18** is arranged for direct contact with the plant **14.** As used herein "direct contact" may refer to physical contact between the plant and electrode, and may be achieved by operatively arranging the electrode to be exposed from a body of the applicator. The applicator electrode **18** comprises an electrically conductive material e.g. copper, zinc, bronze, brass, aluminum or steel.

The geometric configuration of the applicator electrode **18** may be selected depending on the intended treatment regimen, for example: a rod for sweeping through areas of dense plants; a hook-shape for separating plants.

The applicator unit **6** comprises body **20** to carry the applicator electrode **18.** The body **20** may be adapted to be held by a user or fixed to a chassis depending on the particular configuration of the apparatus **2** (e.g. adapted for domestic or agricultural implementation respectively).

In embodiments, which are not illustrated, the applicator electrode is implemented as a plurality of electrodes, e.g. for treatment of multiple plants at a given moment.

Referring to figure 4, the return unit **8** is adapted to receive electrical energy **10** from the applicator unit **6** via the plant **14** (shown in figure 2). The return electrode **22** is electrically connected to the electrical energy supply unit **4** by an electrically conductive material, e.g. by wiring or solid material, which forms part of the transmission circuit **12.**

The return electrode **22** is adapted to provide a return for electrical energy **10** via the plant **14** to complete the transmission circuit **12.** In embodiments, the return electrode **22** is arranged for direct contact with the ground **26** (shown in figure 4). As used herein "direct contact" may refer to physical contact between the ground and electrode, and may be achieved by operatively arranging the electrode to be exposed from a body of the return unit. The return electrode **18** comprises an electrically conductive material e.g. copper, zinc, bronze, brass, aluminium or steel.

The geometric configuration of the return electrode may be selected depending on the intended implementation of the apparatus, for example: an implement for insertion into the ground (e.g. for apparatus that in use remains in a generally fixed position), such as a rod or spike; an implement for movement along the ground (e.g. for apparatus that in use has a variable position), such as a rod or spike), such as a flat plate or roller, and; a combination of the aforesaid implementations.

The return unit **8** comprises body **24** to carry the return electrode **22.** The body **24** may be adapted to be held by a user or fixed to a chassis depending on the particular configuration of the apparatus **2** (e.g. adapted for domestic or agricultural implementation respectively).

In embodiments, which are not illustrated, the return electrode is implemented as a plurality of electrodes, e.g. for treatment of multiple plants at a given moment.

Generally, the apparatus **2** is arranged with the return electrode **22** arranged in operative proximity to the applicator electrode **18.** Operative proximity may refer to a geometric arrangement to limit the path of the electrical energy **10** through the ground **26**, which may advantageous for reasons of efficient and/or electrical safety.

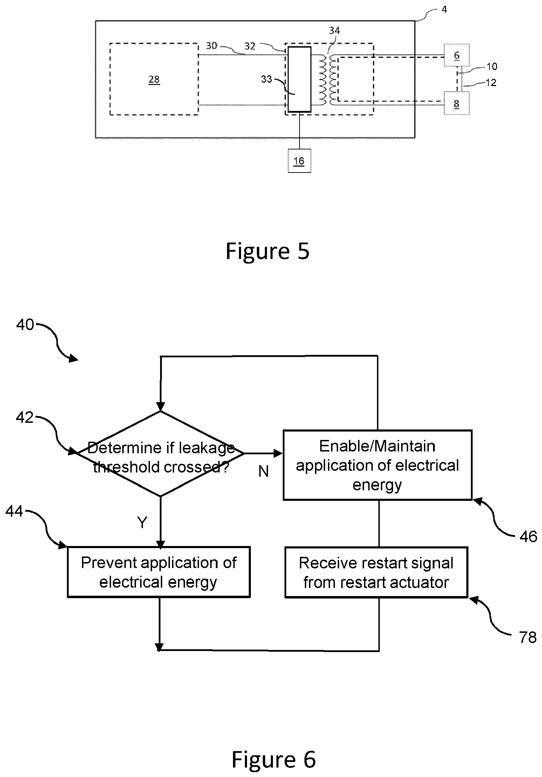

Referring to figure 5, the electrical energy supply unit **4** is arranged to supply processed electrical energy **10** to the transmission circuit **12.** The electrical energy supply unit **4** includes a power supply **28** for supply of supply electrical energy **30.** The power supply **28** may be implemented as one or more of the following: a battery; a fuel cell; a generator, including an internal combustion engine powered generator, which may be implemented with a dedicated internal combustion engine or a shared internal combustion engine for other agricultural equipment, e.g. a tractor, which is arranged to drive the generator; other like. The power supply **28** provides supply electrical energy **30**, in alternating current (AC) or direct current (DC), including pulsated or with other form with a fixed quantity, e.g. in one or more or power; voltage; current; frequency; phase.

The electrical energy supply unit **4** includes an electrical energy processing unit **32** for processing of the supply electrical energy **30** to the electrical energy **10.** The electrical energy processing unit **32** includes an electrical transformer **34** with appropriately configured windings, e.g. for step-up or step down, depending on the configuration of the supply electrical energy **30** and desired output of the electrical energy **10.**

In variant embodiments, which are not illustrated, alternative step-up or step-down converters to the transformer are implemented, e.g. a boost converter, other amplifier topology. A step-up or step-down converter may also be obviated if the electrical energy is supplied in the desired form. For example, the transformer may be obviated if the electrical energy is supplied in the desired form by: the power supply or the power supply is replaced by an input unit to receive a commercial or domestic electrical supply (a mains supply).

Where the power supply **28** provides supply electrical energy **30** as AC (e.g. the power supply **28** is arranged as a generator) or the power supply **28** is omitted and there is an input unit comprising a circuit for receiving an electrical supply (e.g. from a mains electrical supply or other electrical supply) the electrical energy processing unit **32** includes a AC to DC converter (not illustrated) arranged to provide a DC current to a waveform shaping system, which may be referred to as a switching system **33.** Where the power supply **28** provides supply electrical energy **30** as DC, e.g. a battery, an AC to DC converter is obviously obviated.

The electrical energy processing unit **32** includes a switching system **33** to generate the desired wave form (e.g. in shape and/or frequency) in the electrical energy supplied to the electrical transformer **34.** The switching system **33** is implemented an electrically operated switch (e.g. a MOSFET, relay, other transistor).

In variant embodiments of the electrical energy supply unit, which are not illustrated, the power supply (or electrical supply to the input unit) supplies electrical energy of the desired configuration. Accordingly the electrical energy processing unit is obviated. In other embodiments, the power supply (or input unit) supplies electrical energy which only needs step-up or step-down, in which case the switching system is obviated but the transformer is maintained. In other examples the switching system is present but the step-up or step-down converter is omitted.

The electrical circuitry **16** is implemented to control the electrical energy **10**, through the transmission circuit **12.** Said control may implement control of one or more of the following electrical quantities: electrical potential between the applicator and return electrodes; electrical current control; frequency or duty control; phase.

In the embodiment of figure 5, the electrical circuitry **16** controls the switching system **33** to implement control of the voltage and current by pulse width modulation. The frequency is controlled by the rate of switching. In variant embodiments, which are not illustrated the electrical quantities can be control by other means, e.g. including by changing the taping of the electrical transformer (on the primary and/or secondary coil), which may be implemented as a variable transformer, by introducing capacitance and/or inductance in the transmission circuit.

Referring to figure 6, in embodiments, the electrical circuitry **16** implements an electrical energy leakage system **40.** At block **42** the leakage system **40** determines if an amount of leakage of electrical energy from either A) the transmission circuit **12** (e.g. electrical energy **10** which has been transmitted from the electrical energy supply unit **4** to the applicator electrode **6**, but not returned from the return electrode **8** to the electrical energy supply unit **4**) or B) the electrical energy supply unit **4** (e.g. through a fault of one of the components of said unit, as will be discuss) has crossed a threshold. If said threshold has been crossed then block **44** is executed, which prevents transmission of the electrical energy **10** through the transmission circuit **12.** If said threshold has not been crossed then block **46** is executed, which enables transmission of the electrical energy **10** through the transmission circuit **12** (which includes allowing the transmission of the electrical energy **10** to continue).

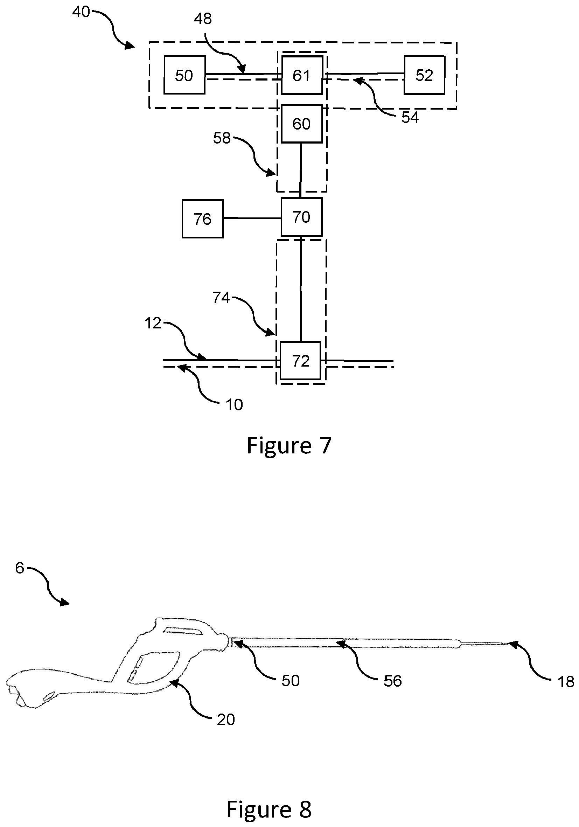

Referring to figure 7, the leakage system **40** includes a leakage circuit **48**, which has a leakage input **50** connected to an leakage return **52.** The leakage circuit **48** receives leakage electrical energy **54** at the leakage input **50** and transmits said leakage electrical energy **54** to the leakage return **52** as part of the leakage circuit **48.** The leakage circuit **48** further includes an electrical path from the leakage return **52** through the earth/via an electrical connection to the transmission circuit **12** or the power supply **28** depending on the implementation of the leakage circuit **48** (as will be discussed).

As used herein, the term "leakage electrical energy" may refer to electrical energy that is transmitted though the leakage circuit **48.** Depending on the implementation of the leakage circuit **48** (as will be discussed) the leakage electrical energy **54** may include: a portion of the electrical energy **10** that is leaked from the transmission circuit **12**; and/or electrical energy that is leaked from the electrical energy supply unit **4**, e.g. from one or more the: transformer **34**; switching system **33**; power supply **28**; AC to DC converter; other associated components that may be implemented.

The leakage system **40** prevents transmission of the electrical energy **10** through the transmission circuit **12** if an electrical quantity of the leakage electrical energy **54** through the leakage circuit **48** is determined as having crossed the aforesaid threshold.

Referring back to figure 7, the leakage system **40** implements a detection circuit **58.** The detection circuit **58** implements a detection unit **60** to determine if the leakage electrical energy **54** in the leakage circuit crosses the threshold. The detection circuit **58** provides a detection signal to a control device as will be discussed.

The detection unit **60** is arranged to determine if the leakage electrical energy **54** crosses a threshold based on a change in an electrical property of the leakage electrical energy **54** (e.g. one or more of the voltage, current, phase, power) crossing the threshold.

The detection unit **60** is implemented as a relay, which is triggered by an electromagnet **61**, e.g. a coil, arranged in the leakage circuit **48.** In such an implementation the detection circuit **58** is electrically isolated from the leakage circuit **48.** Since the magnetic field of the electromagnet **61** is dependent on the current, the threshold in this implementation is based on the current of the leakage electrical energy **54** crossing the threshold, which is sufficient to switch the relay. In a particular example, the current exceeds 1 - 10 mA or 2 - 6 mA or 4 mA to trigger the relay (which can be implemented as an Omron G6K-2F-Y 24DC relay).

In variant embodiments, which are not illustrated, the detection unit may have other implementations, e.g. an ammeter and/or voltmeter arranged to measure the current and voltage through or over the leakage circuit, a hall effect sensor; or other sensor device to measure one of the mentioned electrical properties of the leakage electrical energy.

Appropriate circuitry can be implemented to determine if the relevant electrical property sensed by the detection unit has crossed the threshold, e.g. a comparator for electrical voltage etc.

Although not illustrated, it will be appreciated that the leakage circuit **48** can include suitable circuitry to process the leakage electrical energy **54**, e.g. one or more of: a potential divider to reduce the electrical potential; a filter to filter out electrical noise; an AC to DC converter; other circuitry.

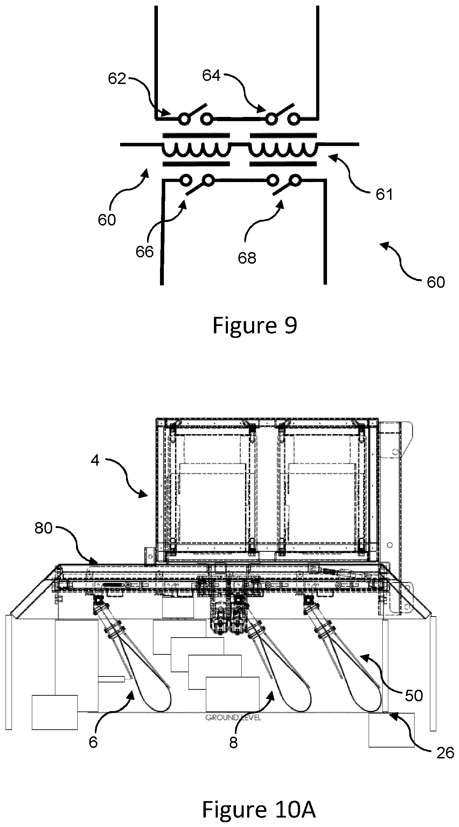

Referring to figure 9, the detection unit 60 is implemented as a first group comprising a first **62** and second **64** detection element, and a second group comprising a first **66** and second **68** detection element. The first group and the second group are arranged to provide separate detection signals to the control unit **60.** In the example, the detection elements are implemented as relays, which can be normally closed and opened by flow of the leakage electrical energy **54** through the coils arranged in the leakage circuit, or the converse.

OR logic is implemented such that if either the first or second groups are triggered, it is determined that the leakage electrical energy **54** in the leakage circuit **48** crosses the threshold. For both groups, AND logic is implemented such that both the detection elements are triggered when determining that the leakage electrical energy **54** in the leakage circuit **48** has crossed the threshold.

In variant embodiments, which are not illustrated, other logic implementations are envisaged, e.g. OR logic for each group or AND logic so that a detection signal is required from both groups for a positive determination. The groups may have a different number of detection elements, e.g. one or more. Only a single group can also be implemented. Two groups can also be implemented but each with only a single detection element.

Referring back to figure 7, in embodiments the control device **70**, e.g. a processor or other electrical circuitry, receives the detection signal from the detection circuit **58.** In the example of there being two groups **62**, **64** there are separate detection circuits (not illustrated in figure 7). The control device **70** is arranged to control an electrically activated switch **72**, which is arranged to interrupt the electrical energy **10** through the transmission circuit **12.**

The control device **70** is arranged to trigger the electrically activated switch **72** to interrupt said electrical energy **10** based on the detection signal from the detection circuit **58**, i.e. the electrically activated switch **72** is triggered when the leakage electrical energy **54** is determined to have crossed the threshold. In the embodiment, the electrically activated switch **72** comprises a relay arranged in the transmission circuit **12**, which is switched based on a magnetic field from a coil triggered by a break signal from the control device **70.** The coil is arranged as part of a control circuit **74.** The control device **70** may control the electrically activated switch **72** directly (as shown in the example) or via an intermediate circuit with further electrically activated switches (not illustrated), which also comprises the control circuit **74.**

In figure 7, the electrically activated switch **72** is arranged in the transmission circuit **12**, however it may have any arrangement to provide the effect of interrupting the electrical energy **10** through the transmission circuit **12**, e.g. it may be arranged to interrupt the circuit including the primary or secondary winding of the electrical transformer **34**; it may be implemented as the switching system **33** or as another part of the electrical energy supply unit **4**, e.g. as part of a circuit in the power supply **28.**

In variant embodiments, which are not illustrated, the leakage system has other implementations, e.g.: the leakage circuit can include a coil to power directly a relay arranged to be switched to break the transmission circuit; a hall effect sensor is implemented in the detection circuit; the leakage circuit is connected to an analogue terminal of a processor (e.g. after a suitable potential divider or other processing of the electrical energy), the processor implements the detection circuit and upon determining the leakage electrical energy having crossed the threshold, either switches the electrically activated switch of the control circuit or sends a break signal to deactivate the power supply.

Referring to figure 7 and figure 6, the leakage system **40** includes a restart actuator **76.** The control device **70** is arranged following a determination of the leakage electrical energy **54** crossing the threshold to require a restart signal (shown in figure 6 as block **78**) from the restart actuator **76** before the electrical energy **10** can be reapplied through the transmission circuit **12.** For example, the control device **70** may prevent the electrical energy **10** from being reapplied through the transmission circuit **12** by maintaining the electrically activated switch **72** to interrupt the electrical energy **10**, or via control of the power supply **28** etc., until the restart signal is provided. The restart signal from the restart actuator is implemented by a circuit including the restart actuator **76** being closed (or in other embodiments open) on actuation of the restart actuator **76.**

In variant embodiments, which are not illustrated, the restart actuator is implemented by software running on the processor, and the restart signal is provided via a user interface. In other embodiments, the restart actuator and its associated functional maybe omitted, e.g. when the leakage electrical energy is determined to have crossed the threshold, the electrical energy in the transmission circuit is prevented from being transmitted for a predetermined amount of time, e.g. 2 - 10 seconds.

### High voltage leakage circuit

In a first example, the leakage circuit **48** is implemented as a high voltage leakage circuit, in which the leakage input **50** is arranged to receive leakage electrical energy **54** from the transmission circuit **12** and the leakage return **52** is arranged to return the leakage electrical energy **54** to the transmission circuit **12.**

### Hand held implementation of apparatus

The leakage input **50** is arranged as a leakage input electrode **50** that is arranged on a peripheral surface of the apparatus. As an example, referring to figure 8, a handheld implementation of the apparatus **2**, typically for domestic use, comprises the applicator unit **6** with the body **20** arranged with a handle portion. An extension **56** extends from the body **20.** The extension **56** carries the leakage input electrode **50** at a proximal end. At a distal end of the extension **56** the applicator electrode **18** is arranged. The body **20** and/or extension **56** can be formed of an electrically insulating material so that they are electrically insulated from the applicator electrode **18.**

The leakage input electrode **50** is arranged as a ring that extends around the extension **56** and a cable (not illustrated) within the extension **50** that interconnects the applicator electrode **18** as part of the transmission circuit **12.** In variant embodiments, which are not illustrated, the leakage input electrode **50** has other arrangements, such as a surface patch, which may be rectangular or circular or other shape.

In the embodiment, the body **20** carries the electrical circuitry **16** and electrical energy supply unit **4**, e.g. the apparatus **2** is arranged as a handheld, portable unit that is powered by a mains electrical supply or a battery.

In variant embodiments, which are not illustrated, the leakage input **50** is alternatively arranged, for example one or more of the following arrangements: there are two electrodes on either side of the handle of the handle portion; there is an electrode arranged at any position between the proximal and distal ends of the extension; the proximal end of the extension includes a protrusion to carry the electrode; the entire extension **56** (which is electrically isolated from the applicator electrode **18**) is the electrode; other positions on the body of the applicator.

The leakage return **52** is arranged as a leakage return electrode that electrically connects the leakage circuit **48** to the ground **26.** The leakage return electrode **52** (not illustrated in figure 8) is connected to the body **20** via a wire (not illustrated) that comprises the leakage circuit **48.** The leakage return electrode may be arranged to abut or be inserted into the ground. Leakage electrical energy **54** is therefore transmitted from the peripheral surface of the applicator unit **6** to the ground **26.** The leakage circuit **48** therefore incorporates a section of the earth **26** back to the return electrode **22** of the return unit **8.**

In variant embodiments, which are not illustrated, the leakage return comprise an electrical connection through the apparatus back to the transmission circuit. The leakage input may also be arranged as a leakage input terminal, which is electrically connected to a chassis (not illustrated) that mounts the applicator unit **6.**

### Large scale implementation

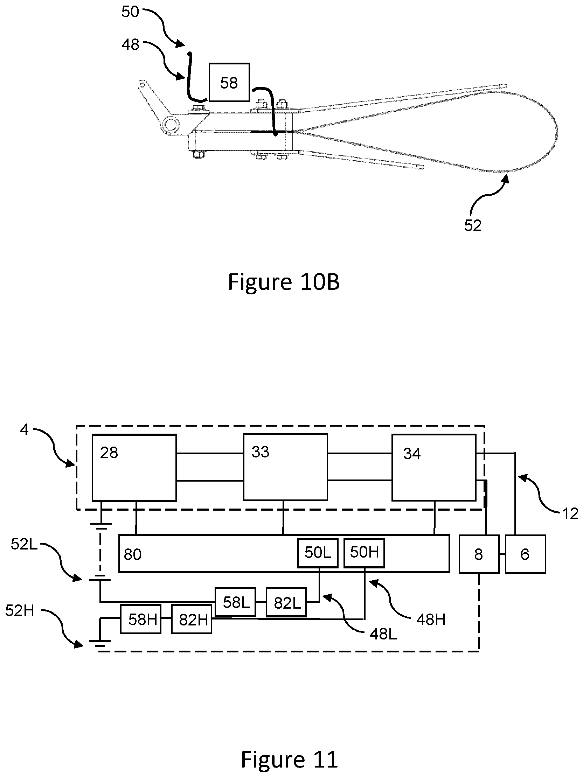

Referring to figures 10A, 10B an implementation of the apparatus **2**, typically for agricultural use, comprises a chassis **80** to which an applicator unit **6**, return unit **8** and electrical energy supply unit **4** are mounted. The chassis **80** is typically part of a vehicle for towing or other agricultural vehicle, including a tractor.

The leakage input **50** is arranged as a leakage input terminal electrically connected to the chassis **80.** The leakage return **52** is arranged as a leakage return electrode that electrically connects the leakage circuit **48** to the ground **26.** The leakage return electrode **52** is arranged to extend from the chassis **80** and abut the ground **26.** Leakage electrical energy **54** is therefore transmitted from the chassis **80** to the ground **26** and the leakage circuit **48** therefore incorporates a section of the earth **26** back to the return electrode **22** of the return unit **8.**

In variant embodiments, which are not illustrated, the leakage return comprise an electrical connection through the apparatus back to the transmission circuit. In embodiments, the leakage return electrode is arranged to insert into the ground, e.g. it is arranged as a rod or spike or other shape. For the large scale version the leakage input electrode may also be arranged on a peripheral surface of the apparatus **2** including the applicator unit **6** as discussed for the hand held variant or a housing (not illustrated) of the chassis **80.**

### Low voltage leakage circuit

In a second example, the leakage circuit **48** is implemented as a low voltage leakage circuit, in which the leakage input **50** is arranged to receive leakage electrical energy **54** from the supply electrical energy **30** of the electrical energy supply unit **4** and the leakage return **52** is arranged to return the leakage electrical energy **54** to the power supply **28** of the electrical energy supply unit **4.**

The electrical energy leaked from the electrical energy supply unit **4** to the low voltage leakage circuit **48**, may be referred to as the supply electrical energy **30** or low voltage electrical energy, since it can comprise any electrical energy on the low voltage side of the converter **34.**

The leakage electrical energy **54** can therefore be from one or more of the following components of the electrical energy supply unit **4**: the transformer **34**; switching system **33**; power supply **28**; AC to DC converter; other associated components that may be implemented. All of which can be be connected to the chassis **80**, e.g. though mechanical interfaces.

Referring to figures 10A and 10B, in the example of the large scale implementation, for brevity a separate low voltage leakage circuit is not illustrated, since it can be implemented in a similar way as for the previously described high voltage circuit. Figure 10A and 10B are therefore used to illustrate both examples interchangeably.

The leakage input **50** and leakage return **52** are arranged as discussed for the high voltage leakage circuit, and are not discussed again for brevity. However, when a neutral (not illustrated) of the power supply **28** is connected to the ground **26**, the leakage return electrode **52** is connected to the ground **26** (e.g. as shown in figure 10A/B) and the low voltage leakage circuit incorporates part of the ground back to the neutral of the power supply **28.** However, when the neutral of the power supply **28** is not connected to the ground, the leakage return **52** comprises a leakage return terminal electrically connected through the apparatus **2** to the neutral of the power supply **28.**

The low voltage leakage circuit can also be implemented for the hand held version in the manner discussed above, which again for brevity is not discussed. In embodiments, which are not illustrated, the hand held version can incorporate a chassis to mount the electrical energy supply unit, which is electrically connected to the leakage input terminal.

It will be appreciated, that in the various implementations of the high and low voltage leakage circuits and/or largescale or hand held versions, the value of the relevant threshold (that when crosses causes transmission of the electrical energy **10** to be prevented) can vary and is appropriately selected based on the specific implementation.

The above described the high voltage leakage circuit or low voltage leakage circuit can be implemented in the apparatus **2** without the other present.

### Combination of low and high voltage leakage circuit

Referring to figure 11, a high voltage leakage circuit **48H** and a low voltage leakage circuit **48L** are both implemented in the apparatus **2.**

The low voltage leakage circuit **48L** is arranged with: the leakage input terminal **50L** electrically connected to the chassis **80**, and leakage return terminal **52L** electrically connected to the ground **26.** The neutral of the power supply unit **28** is also electrically connected to the ground **26.** The low voltage leakage circuit **48L** therefore incorporates a section of the ground **26** back to the neutral of the power supply 28, which is electrically connected to the ground **26.**

The high voltage leakage circuit **48H** is arranged with the leakage input terminal **50H** electrically connected to the chassis **80**, and leakage retum electrode **52H** electrically connected to the ground **26.** The high voltage leakage circuit **48H** therefore incorporates a section of the ground **26** back to the return electrode **22** of the transmission circuit **12.**

Since the leakage inputs of the high voltage leakage circuit and the low voltage leakage circuit are electrically common, to prevent leakage electrical energy **54** from the transmission circuit **12** triggering the detection circuit **58L** of the low voltage leakage circuit **48L**, a filtering system **82L** is implemented to filter the leakage electrical energy **54** from the transmission circuit **12** from passing through the low voltage transmission circuit **48L.**

Typically the waveform shaping system **33** implements a different frequency for the low voltage electrical energy **30** compared to the electrical energy **10** of the transmission circuit **12.** For example, the low voltage electrical energy **30** is supplied by the power supply **28** at 50 Hz, and the waveform shaping system **33** implements a higher frequency (e.g. 1k Hz). Accordingly, the filtering system **82L** is implemented in the low voltage leakage circuit **48L** as a low pass filter (e.g. as an RCL filter) upstream of the detection unit (not illustrated in figure 11) of the detection circuit **58L.**

The filtering system may also be implemented to prevent leakage electrical energy **54** from the electrical energy supply unit **4** from passing through the high voltage transmission circuit **48H**, e.g. it may comprise a high pass filter **82H** upstream of the detection unit (not illustrated in figure 11) of the detection circuit **58H.**

In variant embodiments, which are not illustrated, the waveform shaping system implements the electrical energy of the transmission circuit at other frequencies, e.g. those lower than that of the low voltage electrical energy. Accordingly, the filtering system may be implemented as a low, high and pass or other filter configuration.

In variant embodiments, the leakage input terminal of the low voltage leakage circuit and the leakage input terminal of the high voltage leakage circuit are arranged so that they are not connected by an electrically common member, accordingly the filter system can be omitted.

It will be appreciated that any of the disclosed methods (or corresponding apparatuses, programs, data carriers, etc.) may be carried out by either a host or client, depending on the specific implementation (i.e. the disclosed methods/apparatuses are a form of communication(s), and as such, may be carried out from either 'point of view', i.e. in corresponding to each other fashion). Furthermore, it will be understood that the terms "receiving" and "transmitting" encompass "inputting" and "outputting" and are not limited to an RF context of transmitting and receiving radio waves. Therefore, for example, a chip or other device or component for realizing embodiments could generate data for output to another chip, device or component, or have as an input data from another chip, device or component, and such an output or input could be referred to as "transmit" and "receive" including gerund forms, that is, "transmitting" and "receiving", as well as such "transmitting" and "receiving" within an RF context.

As used in this specification, any formulation used of the style "at least one of A, B or C", and the formulation "at least one of A, B and C" use a disjunctive "or" and a disjunctive "and" such that those formulations comprise any and all joint and several permutations of A, B, C, that is, A alone, B alone, C alone, A and B in any order, A and C in any order, B and C in any order and A, B, C in any order. There may be more or less than three features used in such formulations.

In the claims, any reference signs placed between parentheses shall not be construed as limiting the claim. The word 'comprising' does not exclude the presence of other elements or steps then those listed in a claim. Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

Unless otherwise explicitly stated as incompatible, or the physics or otherwise of the embodiments, example or claims prevent such a combination, the features of the foregoing embodiments and examples, and of the following claims may be integrated together in any suitable arrangement, especially ones where there is a beneficial effect in doing so. This is not limited to only any specified benefit, and instead may arise from an "ex post facto" benefit. This is to say that the combination of features is not limited by the described forms, particularly the form (e.g. numbering) of the example(s), embodiment(s), or dependency of the claim(s). Moreover, this also applies to the phrase "in one embodiment", "according to an embodiment" and the like, which are merely a stylistic form of wording and are not to be construed as limiting the following features to a separate embodiment to all other instances of the same or similar wording. This is to say, a reference to 'an', 'one' or 'some' embodiment(s) may be a reference to any one or more, and/or all embodiments, or combination(s) thereof, disclosed. Also, similarly, the reference to "the" embodiment may not be limited to the immediately preceding embodiment.

As used herein, any machine executable instructions, or compute readable media, may carry out a disclosed method, and may therefore be used synonymously with the term method, or each other.

The foregoing description of one or more implementations provides illustration and description, but is not intended to be exhaustive or to limit the scope of the invention to the precise form disclosed. Modifications and variations are possible in light of the above teachings or may be acquired from practice of various implementations of the present disclosure.

### LIST OF REFERENCES

**2** Electrical apparatus
   **4** Electrical energy supply unit
      **28** Power supply
      **32** Electrical energy processing unit
         **33** Switching system
         **34** Electrical transformer
   **6** Applicator unit
      **18** Applicator electrode
      **20** Body
         **56** Extension
   **8** Return unit
      **22** Return electrode
      **24** Body
   **10** Electrical energy
   **30** Supply electrical energy
   **12** Transmission circuit
   **16** Electrical circuitry
      **40** Leakage system
      **54** Leakage electrical energy
      **48** Leakage circuit
         **50** Leakage input
         **52** Leakage return
      **58** Detection circuit
         **60** Detection unit
         **62**, **64** Detection elements of first group
         **66**, **68** Detection elements of first group
      **70** Control device
      **74** Control circuit
         **72** Electrically activated switch
      **76** Restart actuator
   **80** Chassis
**14** Plant
**26** Ground

## Claims

1. Electrical apparatus to kill a plant or at least attenuate plant growth, the apparatus comprising:
an electrical energy supply unit;
an applicator unit comprising an applicator electrode;
a return unit comprising a return electrode;
electrical circuitry;
the electrical energy supply unit arranged to apply electrical energy through a transmission circuit comprising the applicator electrode, a plant, and the return electrode,
the electrical circuitry implementing a leakage system arranged to detect leakage of the electrical energy from the transmission circuit and/or electrical energy from the electrical energy supply unit and to prevent transmission of electrical energy through the transmission circuit once said leakage of electrical energy crosses a threshold.

2. The apparatus of claim 1, wherein the leakage system comprises at least one leakage circuit, having a leakage input and a leakage return, the leakage input to receive leakage electrical energy from the transmission circuit and/or the electrical energy supply unit,
the leakage system arranged to prevent transmission of electrical energy through the transmission circuit once an electrical quantity of the leakage electrical energy through the leakage circuit crosses the threshold.

3. The apparatus of claim 2, wherein the leakage system implements a detection circuit, wherein the detection circuit includes a detection unit to determine if the electrical energy through the leakage circuit crosses the threshold.

4. The apparatus of claim 3, wherein the detection unit comprises a first group of one or a plurality of detection elements, wherein for an overall determination of the leakage electrical energy in the leakage circuit to cross the threshold, each of the first group of one or a plurality detection elements is required to determine if the leakage electrical energy through the leakage circuit crosses the threshold.

5. The apparatus of any preceding claim, wherein the leakage system implements an electrically activated switch arranged to interrupt the electrical energy of the transmission circuit, wherein the leakage system is arranged to trigger the electrically activated switch to interrupt said electrical energy if the leakage of the electrical energy crosses said threshold.

6. The apparatus of any preceding claim, wherein the leakage system is configured when it is determined that the leakage of electrical energy has crossed the threshold to prevent transmission of electrical energy within a predetermined time duration, which is based on a frequency of the electrical energy.

7. The apparatus of any of claims 2 to 6, wherein the electrical energy supply unit includes a converter to step-up low voltage electrical energy to a comparatively high voltage of the electrical energy of the transmission circuit,
wherein the leakage circuit includes a high voltage leakage circuit, in which the leakage input is arranged to receive leakage electrical energy from the transmission circuit and the leakage retum is arranged to return the leakage electrical energy to the transmission circuit and/or
wherein the leakage circuit includes a low voltage leakage circuit, in which the leakage input is arranged to receive leakage electrical energy from the low voltage electrical energy and the leakage return is arranged to return the leakage electrical energy to a power supply of the electrical energy supply unit.

8. The apparatus of claim 7, wherein the high voltage leakage circuit includes the leakage input arranged as a leakage input electrode that is arranged on a peripheral surface of the apparatus.

9. The apparatus of claim 8, wherein an electrically common member is electrically connected to the electrical energy supply unit,
wherein the high voltage leakage circuit and/or the low voltage leakage circuit includes the leakage input arranged as a terminal connected to the electrically common member.

10. The apparatus of claim 9, wherein the electrically common member is arranged as a chassis that mounts and is electrical connected to the electrical energy supply unit.

11. The apparatus of claim 9 or 10, wherein the leakage return of the high voltage leakage circuit and/or the leakage return of the low voltage leakage circuit is arranged as an leakage return electrode for electrical connection with the ground.

12. The apparatus of any of claims 9 to 11, wherein the high voltage leakage circuit and the low voltage leakage circuit includes the leakage input thereof arranged as a terminal connected to the electrically common member, and the apparatus includes a filtering system, which is implemented to filter:
the low voltage electrical energy from transmitting through the high voltage leakage circuit and/or
the electrical energy of the transmission circuit from transmitting through the low voltage leakage circuit.

13. A method of treating a plant with electrical energy, the method comprising:
detecting leakage of electrical energy from at least one of A) a transmission circuit comprising an applicator electrode, and a return electrode, B) an electrical energy supply unit that supplies the electrical energy to the transmission circuit;
preventing transmission of electrical energy through the transmission circuit once said leakage of electrical energy crosses a threshold.

14. Electrical circuitry to implement the method of claim 13.

15. A computer program to implement the method of claim 13.
